Europäisches Patentamt

(19) European Patent Office

Office européen des brevets

(11) Publication number: **0 032 362**
**B1**

(12) **EUROPEAN PATENT SPECIFICATION**

(45) Date of publication of patent specification: **22.08.84**

(51) Int. Cl.³: **G 02 F 1/137**

(21) Application number: **80850005.2**

(22) Date of filing: **10.01.80**

(54) **Chiral smectic liquid crystal electro-optical device and process of making the same.**

(43) Date of publication of application:
**22.07.81 Bulletin 81/29**

(45) Publication of the grant of the patent:
**22.08.84 Bulletin 84/34**

(84) Designated Contracting States:
**DE FR GB IT NL SE**

(56) References cited:
**DE-A-2 848 581**
**US-A-3 851 318**

**JAPANESE JOURNAL OF APPLIED PHYSICS,
vol. 18, supplement 18-1, 1979 Tokyo, JP K.
YOSHINO et al. "New electrooptical effects in
ferroelectric liquid crystals", pages 427-433
IEEE TRANSACTIONS ON MAGNETICS, vol.
MAG-12, no. 6, November 1976, New York,
USA R.B. MEYER "Liquid crystals for
magneticians: ferroelectric liquid crystals",
page 788**

(73) Proprietor: **Clark, Noel A.**
**3106 Kittrell Court**
**Boulder, Colorado 80303 (US)**
(73) Proprietor: **Lagerwall, Sven Yngve Torbjörn**
**Snäckvägen 30**
**S-414 75 Göteborg (SE)**

(72) Inventor: **Clark, Noel A.**
**3106 Kittrell Court**
**Boulder, Colorado 80303 (US)**
Inventor: **Lagerwall, Sven Yngve Torbjörn**
**Snäckvägen 30**
**S-414 75 Göteborg (SE)**

(74) Representative: **Hjärne, Per-Urban et al**
**H. Albihns Patentbyra AB Box 7664**
**S-103 94 Stockholm (SE)**

(56) References cited:
**PHYSICAL REVIEW LETTERS, vol. 40, no. 12,
March 1978. New York, US Ch. Y. YOUNG et al.
"Light-scattering study of two-dimensional
molecular-orientation fluctuations in a freely
suspended ferroelectric liquid-crystal film",
pages 773-776**

MOLECULAR CRYSTALS AND LIQUID
CRYSTALS, vol. 53, no. 3/4, 1979, London, GB
G. PELZI et al. "Tilt angle determination of a
smectic C phase by field-induced freedericksz
transition and Y ray investigations" pages
167-179
LE JOURNAL DE PHYSIQUE, vol. 36, March
1975, Paris, FR R.B. MEYER et al. "Ferroelectric
liquid crystals", pages L-69-L-71
MOLECULAR CRYSTALS AND LIQUID
CRYSTALS, vol. 42, 1977 London, GB P.
SIMOVA et al. "Coherent light diffraction in a
smectic C liquid crystal", pages 295-305
MOLECULAR CRYSTALS AND LIQUID
CRYSTALS vol. 40, 1977, London, GB R.B.
MEYER "Ferroelectric liquid crystals; a review",
pages 33-48
JETP LETTERS, vol. 25, no. 2, January 20, 1977,
New York, USA B.I. OSTROVSKII et al.
"Ferroelectric properties of smectic liquid
crystals", pages 70-72
COMPTES RENDUS DES SEANCES DE
L'ACADEMIE DES SCIENCES, vol. 282, série C,
April 5, 1976, P. KELLER et al. "Synthèse et
mésomorphisme de quelques p-alkyl-
oxybenzylidène, p'-aminocinnamates de R(-)
chloro-2 propyle", pages 639-641
JAPANESE JOURNAL OF APPLIED PHYSICS,
vol. 17, no. 7, July 1978, Tokyo, JP. H. TAKEZOE
et al. "Birefringence in the SmA phase and the
disappearence of helicoidal structure in the
SmC phase caused by an electric field in
DOBAMBC", pages 1219-1224

## Description

The present invention regards a liquid crystal electro-optical device wherein between polarizers is arranged a liquid crystal confined between two plane surfaces of two plates, the liquid crystal being a chiral tilted smectic C- or H-type material, said surfaces comprising a treatment to favour a liquid crystal molecular orientation at said surfaces which influences the molecular long axes toward an orientation parallel to the surfaces, and wherein a layered liquid crystal structure has its layers perpendicular to the surfaces, electrodes being arranged on both sides of the liquid crystal.

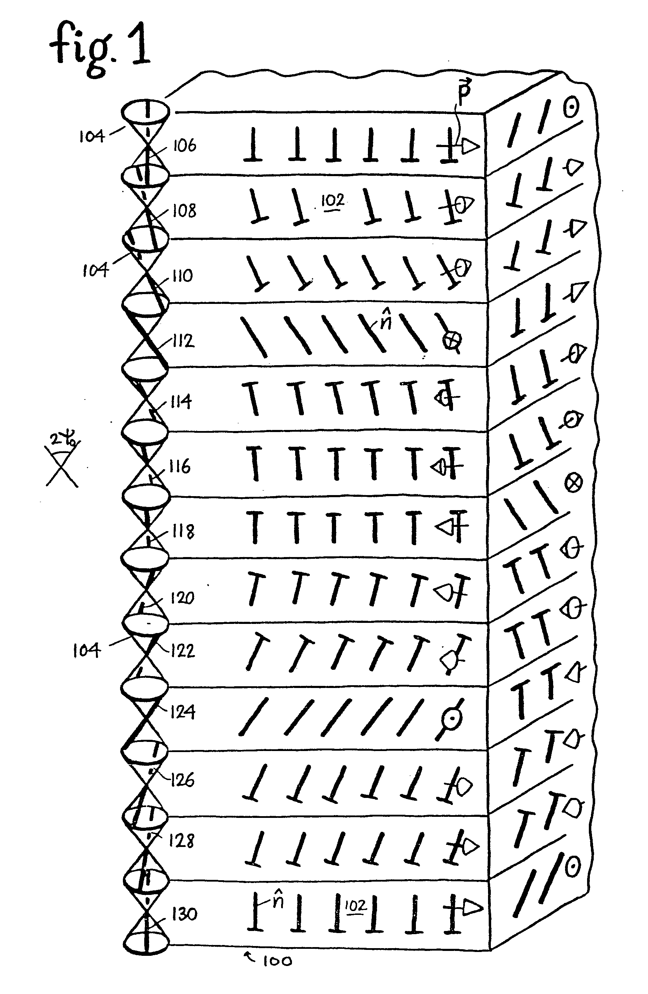

An experimental setup showing similarities to the above recited is found in the "Japanese Journal of Applied Physics" 18, Suppl. 18-1 (1979), pp. 427—433. According to this setup, shown in Fig. 1 of the article, the liquid crystal is built up in a helix structure parallel to the two plane surfaces. By applying an electrical field over the liquid crystal, it is possible to change the transmission of light through the liquid crystal, and the authors ascribe this effect to light scattering effects. The fastness of the effect as stated is at best of the order of 1/30 second.

It is an object of the present invention to obtain a liquid crystal electro-optical device which is substantially, i.e. orders of magnitude, faster than those which have been known previously. Particularly, an object is to obtain a device of the light-valve type, such as is presently common in watch and calculator devices, but which is faster than those known devices. These known devices are based on dielectric alignment effects in nematic, cholesteric, and smectic phases in which, by virtue of the dielectric anisotropy, the average molecular long axis takes up a preferred orientation in an applied electric field. Since the coupling of an applied electric field by this mechanism is rather weak, the electro-optical response time for these devices is too slow for many potential applications.

Liquid crystal devices (LCD) have a number of unique characteristics inlcuding low voltage and low power operation making them perhaps the most promising of the non-emissive electro-optic display candidates. The slow response and insufficient non-linearity in LCD's have been the serious limitations. The lack of speed becomes especially important in proportion to the number of elements that have to be addressed in a device. This leads to increasingly impractical production costs for flat-panel displays with potential use in computer terminals, oscilloscopes, radar and T.V. screens.

It is thus a further object of the invention to obtain a device which can serve as a fast display screen, useful in the above connections. Another object is to obtain a liquid crystal device which has at least two stable states which can be switched by an electrical field.

Those and other objects and advantages are obtained, according to the present invention, by constructing a device as recited, such that

a) said surface treatment is arranged to enforce the said molecular orientation parallel to the surfaces such that it permits an orientation of unspecified direction in the surface plane, and

b) the distance between said two surfaces is sufficiently small to suppress the inherent tendency of the chiral tilted smectic C- or H-type material for helical arrangement of molecular orientation, thereby at the same time removing the cancelling of dipole moments caused by a helix and forming bistable ferroelectric domains switchable by means of an electric field across the surfaces, and

c) said electrodes are split into a plurality of portions for enabling independent switching of different parts of the liquid crystal.

Preferred embodiments are recited in subclaims. A method for the production of a device as recited is claimed in claim 6 below.

Figure 1 is a schematic of a chiral smectic C or H liquid crystal. Crystal 100 is comprised of layers 102 of molecules. Within each layer 102, the average orientation of the long axes, denoted by the unit vector $\hat{n}$, is tilted at an angle $\psi_0$ to the layer normal. Meyer et al, in an article entitled "Ferroelectric Liquid Crystals" in *Le Journal de Physique*, Volume 36 (March, 1975, pp. L-69 to L-71) show that tilted smectic liquid crystals made of optically active molecules (chiral smectic C or H liquid crystals) would, in general, be ferroelectric possessing an electric dipole density, $\vec{P}$, which is perpendicular to the molecular tilt direction, $\hat{n}$, and parallel to the smectic layer planes. Their demonstration specifically applies to the smectic C phase and also to the smectic H phase, which is close in structure to the smectic C, but exhibits a higher viscosity against the reorientation of $\hat{n}$ about an axis normal to the layers. The presence of the electric dipole in these chiral smectics provides a much stronger coupling of the molecular orientation to the applied electric field, $\vec{E}$, than is available via the dielectric anisotrophy. Furthermore, the coupling is polar in that the preferred orientaion of $\vec{P}$ is parallel to $\vec{E}$ so that reversing the polarity of the applied electric field reverses the preferred orientation of $\vec{P}$, meaning that field reversal can be effectively used to control molecular orientation.

Two properties of ferroelectric smectic liquid crystals have impeded the development of convenient methods of exploiting their intrinsic advantages. First, their plane polarization will lie parallel to the layered planes as in Figure 1 but will be otherwise unconstrained. Consequently, unlike crystalline ferroelectrics, the ferroelectric smectic liquid crystal does not spontaneously form domains of uniform orientation of $\vec{P}$ in the bulk as this requires preferred orientation directions which, in a crystalline ferroelectric, for example, are provided by the crystal lattice.

Second, as an additional result of the molecule chirality, in a bulk ferroelectric smectic C or H liquid crystal, the unit vector $\hat{n}$ and polarization $\vec{P}$ spiral about the axis normal to the layers from layer to layer through the sample as in Figure 1. The spiralling cancels the macroscopic dipole moment and corresponds to macroscopic cancelling of polarization by domain formation in crystalline ferroelectrics.

Thus, in Figure 1, cone 104 for each layer 102 represents the locus of possible orientations of the molecules in a layer. Note that the cone forms an angle $\psi_0$ with its longitudinal axis. Unit vectors ($\hat{n}$) 106 through 130 represent the average alignment of the long axes of the molecules in each of the layers. As can be seen, the projection of vector 106 onto the plane represented by the sheet of drawing is a line normal to the plane of layers 102. Moving down through the layers, the average unit vector $\hat{n}$ of the molecules spiral. Thus, the unit vectors spiral through an azimuthal angle $\phi$, indicated in Figure 1 of $\phi=90°$ between vector 106 and vector 112. The unit vectors spiral through 180° between vector 112 and vector 124. Finally the unit vectors spiral another 90° between vector 124 and vector 130, so that the lotal spiral from vector 106 to vector 130 is 360°. Thus, the average unit vector $\hat{n}$ of molecules in the layer associated with unit vector 106 is parallel with the average unit vector n of molecules in the layer associated with unit vector 130. The distance between the layer having unit vector 106 and the layer having unit vector 130 is referred to as the pitch of the helix formed by molecules in a direction perpendicular to the layers. In each layer the ferroelectric polarization $\vec{P}$ is normal to $\hat{n}$ and lying in the layer plane.

The distortion and unwinding of the spiral by an applied electric field, similar to that observed in chiral nematics, has been demonstrated. See Meyer et al, op. cit., and Martinot-Lagarde, "Observation of Ferroelectrical Monodomains in the Chiral Smectic C Liquid Crystals", *Le Journal de Physique Colloq*, Volume 37 (1976, pp. C3-129 through C3-132), Martinot-Lagarde, "Direct Electrical Measurement of the Primitive Polarization of a Ferroelectrics Chiral Smectic C Liquid Crystal", *Le Journal de Physique*, Volume 38 (January, 1977, pp. L-17 through L-19), and Takezoe et al "Birefringence in the Sm A Phase and the Disappearance of Helicoidal Structure in the Sm C Phase Caused by an Electric Field in DOBAMBC", *Japanese Journal of Applied Physics*, Volume 17, No. 7 (Jul, 1978, pp. 1219—1224). The suppression of the helix in chiral smectic C liquid crystals by boundary conditions which require molecules near the boundary to be parallel to the surface and in a particular direction has also been observed. See Brunet et al "Defauts dans les Smectiques C Chiraux", *Ann. Phys.*, Vol. 3, No. 2—3—4 (1978, pp. 237—247).

Although the advantages of ferroelectric liquid crystals to produce electrooptic effects have been recognized, such effects have not been demonstrated. See Meyer, "Ferroelectric Liquid Crystals; A Review", *Mol. Cryst. Liq. Cryst.*, Volume 40 (1977, pp. 33—48, and especially pp. 36, 38 through 40, 47). On the contrary, although several research groups in different countries have, since 1975, investigated the response of ferroelectric liquid crystals to electric fields, they have not found a significantly faster response than that characteristic of already existing kinds of liquid crystals. It would thus be highly desirable to provide a method whereby the strong coupling of molecular orientation to the applied electric field available in ferroelectric liquid crystals could be effectively utilized to provide a fast, polarity senstive electro-optical device.

The present invention is a ferroelectric liquid crystal electro-optical device in which the strong coupling of the molecular orientation to an applied electric field is effectively utilized to provide a fast, polarity sensitive device. In the present invention, chiral smectic C or H liquid crystal material is disposed between flat plates which are treated to enforce molecular orientation parallel to the the plates but of unspecified direction in the surface planes. The plates are spaced by a distance sufficiently small to ensure unwinding of the helix. The present inventors have discovered that by employing this structure, the liquid crystal orientation field possesses two stable states. The liquid crystal can be switched between the two states by reversing the polarity of an externally applied electric field, to make a bistable light valve or other electro-optical devices.

If the present invention is employed as a light valve, the boundary plates are of a transparent material and are coated with a semi-transparent electrically conductive layer by which an electric field is applied to the liquid crystal. The orientation of the molecules changes with the reversal of the polarity of the electric field to allow the selection of either of the two stable states. The two states possess optical axes of different orientation, and reorientation of at least one optical axis is employed to alter the intensity of light passing through a polarizer-liquid crystal-polarizer assembly. The resultant electro-optical device has the following attributes: 1) High speed. The electro-optical response is as much as 1,000 to 10,000 times faster (for the smectic C) than currently available electro-optical devices using liquid crystal. 2) Bistability. The electro-optical response is characterized by two stable states, either of which may be selected by an appropriate electric field and either of which is stable in the absence of the field. 3) Threshold behavior. The change from no switching response to full switching response is made over a very small range in the amplitude and duration of the applied field. 4) Large electro-optical response. The optical change induced by the electric field corresponds to a rotation through a 20° to 60° angle of a uniaxial material having a refractive index and anisotropy $\Delta n$ of greater than 0.2. This response is 10 to 100 times larger than that attainable in other bistable electro-optical devices. 5) Built-in gray scale. Due to nonlinearities in the switching range, pulse amplitude and pulse width modulation can be used to gain multi-level memory capacity. 6) Color control. The sample birefringence and orientation of the two polarizers can be manipulated to give color effects. Either of two colors in a transmissive or reflective mode of operation could be achieved with a single smectic C sample positioned as described above between two polarizers. With a structure consisting of two smectic C samples between two polarizers, a light valve transmitting or reflecting four colors is achievable.

The present invention may be employed in a variety of applications which are not now possible with the current art. The bistable characteristic of the present invention is advantageous in situations requiring a large number of individual electro-optical devices, such as graphic or pictorial planar displays. The bistability of the device obviates the need for an external electronic or other memory to maintain an image. The present invention may be employed successfully as a matrix-addressed video display. The response of the individual elements is rapid enough to permit the required rate of frame change and its threshold sensitivity is such that pulses applied to alter a particular element do not alter others in the same row or column. Also, the optical change associated with the electro-optic effect is large enough to allow for its convenient use. In contrast, for bistable crystalline ferroelectrics, operated by considerably higher voltages, the optical anisotropy is very small and light control effects can be made operative only over a range of viewing angle which is too small to be useful in display applications.

The present invention operates by field effect, meaning that very high impedance and correspondingly low currents are found. This is compatible with the low power dissipation required in many applications. Thus, as a result of the microsecond switching speed, sufficient intrinsic non-linearity and lower power consumption, the present invention is suitable for large scale matrix addressing and multiplexing applications. Among other things, it thus opens up the video domain and the optics communications domain for liquid crystals.

These and other objects and advantages of the invention will become more apparent or more readily appreciated from the following detailed description of the presently preferred exemplary embodiments of the invention taken in conjunction with the accompanying drawing, of which:

Figure 1 is a schematic illustration of a chiral smectic C or H liquid crystal in bulk; and

Figure 2 is a schematic, exploded, representation of an electro-optical device according to the present invention.

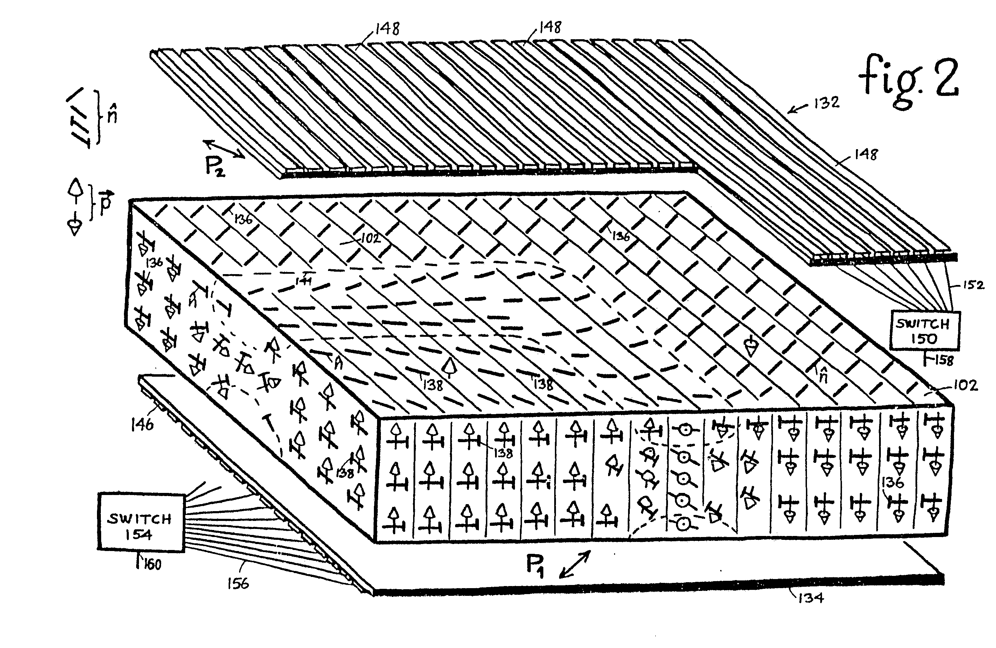

Figure 2 illustrates an electro-optical device according to the present invention. Liquid crystal 100 is positioned between uniformly spaced flat or nearly flat plates 132 and 134. The planes of layers 102 are formed perpendicular to plates 132 and 134. Within each layer, the vector $\hat{n}$ indicating the orientation of the axes lies at an angle $\psi_0$ with respect to the normal of layers 102.

The surfaces of plates 132 and 134, which are contiguous with liquid crystal 100, are treated to favor a liquid crystal molecular orientation at the surface which has the average orientation of the molecular long axes parallel to the surface, but of unspecified direction in the surface plane. Several methods of achieving this orientation are known, and the specific surface treatment employed depends on the smectic C or H compound or compounds being used. For example, with the compounds decyloxy-benzylidene p'-amino 2 methyl butyl cinnamate (DOBAMBC) and hexyloxybenzylidene p'-amino 2 chloropropyl cinnamate (HOBACPC) either clean glass or clean tin oxide layers induce this orientation. Alternately, a coating of an appropriate polymer, such as n-methyl-3-aminopropyltrimethoxysilane (MAP) has also been shown to induce this orientation. See Kahn et al, *Proceedings of the IEEE,* Volume 61 (1973, pp. 281—8).

As mentioned above, layers 102 must be normal or nearly normal to plates 132 and 134. This can be readily achieved in materials which possess smectic A phases at higher temperatures. In this case, the smectic A liquid crystal is formed by cooling from either the isotropic or nematic phases, depending on the compound. The formation of a smectic A phase with the above-mentioned boundary conditions will produce a fan texture which has layers normal to the bounding plates and locally bent into arcs of circles. Upon cooling to the smectic C or H phase, this arrangement of layers is left essentially unchanged, primarily because of the elastic restoring forces present against compression of the layers.

For many applications, such as light valves, it is further necessary to orient layers 102 so that they are flat and uniformly normal to some direction parallel to the plates 132 and 134. This can be achieved in several ways. If the smectic A is formed from a nematic phase, the application of a sufficiently large magnetic field oriented parallel to plates 132 and 134 will produce a nematic monodomain with the average molecular orientation along the magnetic field. Upon cooling into the smectic A phase, a smectic A monodomain will form, having flat layers normal to the magnetic field direction.

A smectic A monodomain can also be formed by applying a shear strain to the liquid crystal in the smectic A phase near the high end of the smectic A temperature range. In this case, one boundary plate is moved very gently (so as not to induce homeotropic alignment) relative to the other. The layers, in order to minimize elastic strain, will reorient to lie parallel to the direction of plate motion. This method is especially useful for materials and mixtures which exhibit no nematic phase.

One the smectic A sample is oriented with layers 102 flat and normal to plates 132 and 134, cooling to the smectic C or H phase leads to the structure indicated in Figure 2. As indicated in Figure 1, for thick samples the unit vectors (ñ) 106—130 and therefore dipoles $\vec{P}$ spiral about the direction normal to the layers, a result of the molecular optical activity. However, this helix cannot form throughout the liquid crystal and still satisfy the boundary condition of having molecules parallel to plates 132 and 134 at the surface of the liquid crystal. As the liquid crystal is made thinner, such that the distance between plates 132 and 134 approaches the helix pitch, the volume decreases and it costs less energy to unwind the helix in the bulk so that for sufficiently thin samples, the boundary condition will be satisfied and the helix suppressed. The suppression of the helix is found when the plates are separated by a distance of less than on the order of five times the helix pitch.

This helix suppression leads to molecular orientation 136, or the equally stable molecular orientation 138 as illustrated in Figure 2. As illustrated, orientation 138 has electric dipole $\vec{P}$ up and orientation 136 has electric dipole $\vec{P}$ down. Either orientaion can be favored by the application of an electric field to the sample to produce a field parallel to the polarization dipole $\vec{P}$. The orientations in the sample will be separated by domain walls illustrated by dashed lines 144, the structure and width of which will be determined by the energy required to alter the smectic tilt angle, the layer compression energy, and, most importantly, the surface energy and director bend and twist elastic energies. In 1.5 $\mu$m thick DOBAMBC and HOBACPC samples, the domain walls are less than 1 $\mu$m thick. The application of an electric field will alter the orientation of molecules in the domain all region to expand the favored orientation.

Domain walls interact with defects in the layer structure, scratches and pits in the surface, and particulate impurities in the bulk and on the surface. These interactions have the effect of maintaining, the positions of the domain walls cone moved to a particular place by an applied electric field. As a result, the domains exhibit hysteresis, which gives threshold behavior and bistability. Bistability results since upon completion of a short application of an electric field applied to favor, for example, orientation 138, the domain wall will be stably pinned so that the sample will remain in orientation 138. Similarly, the same holds for the opposite polarity field with orientation 136. Threshold behavior results because once the walls become bound, it takes an applied force larger than some critical value to dislodge them.

The sudden application of an electric field aimed at causing switching will be followed by the nucleation and motion of domain walls. The time required for a given area of the sample to change state will be determined by the rate of domain wall displacement and the distance they must travel to sweep over the entire sample. In general for bistable latching by an electric field pulse to occur, the electric field pulse must be of sufficient duration so that change of orientation is completed during the pulse. This time will decrease with increasing applied electric field because of more rapid domain wall motion and more numerous domain walls.

In a 1.5 $\mu$m thick HOBACPC sample at T=88°C made with clean tin oxide coated plates, a rectangular voltage pulse of duration $\tau$=5 $\mu$s and amplitude A=10V will switch the liquid crystal orientation field in about 5 $\mu$s. As $\tau$ or A is reduced the switching threshold is approached such that a 10V, 4 $\mu$s or 8V, 5 $\mu$s pulse will not actuate switching. The sample will remain in the switched state until an above threshold pulse of the opposite polarity is applied. In the above mentioned HOBACPC samples, pulses over the range A=0.2V, $\tau$=4 $\mu$s to A=55V, $\tau$=500ns were observed to actuate switching. In the case of short, high voltage pulses, the reorientation response time did not decrease below 1 $\mu$s.

The contrast ratio critically depends on the quality of the surface treatment, the polarizers employed and their orientation, and on the pulse height and width. With 5 $\mu$s, 10V pulses, and with unsophisticated surface treatment, a contrast ratio of better than 20:1 was easily obtained in laboratory samples.

More complex surface treatments will enhance bistability. For example, a series of parallel, rectangular ridges (several $\mu$m wide, several $\mu$m high, and spaced by several $\mu$m) can effectively orient the unit vector ñ at the surface such that the molecular long axes are parallel to the ridges. In the preferred embodiment, it is advantageous to employ two sets of parallel ridges, oriented at an angle of $2\psi_0$ with respect to each other such that in orientation 136, the unit vector is parallel to one set of ridges, and in orientation 138, the unit vector is parallel to the other set. In this way, hysteresis exhibited in moving between the two stable orientations can be precisely controlled.

As explained above with respect to Figure 2, molecular orientation, 136 is different from molecular orientation 138. This difference may be exploited as the basis of a light control mechanism as follows. Sample 100 is disposed between polarizing sheets. In the preferred embodiment, plates 132 and 134 are themsleves polarized. In the simplest light valve embodiment, plates 132 and 134 are oriented with their easy polarization axes, P1 and P2, respectively, mutually perpendicular. Liquid crystal 100, which is biaxial having the plane containing the optical axes parallel to plates 132 and 134, is oriented so that one of the optical axes is parallel to the polarization directions P1 of plate 134 in one of the stable orientations, such as orientation 136. With liquid crystal 100 in orientation 136, light passing through plate 134 and normally incident on crystal 100 will traverse the sample with its polarization state unchanged and be extinguished by plate 132 having a perpendicular polarization direction P2. Upon switching liquid crystal 100 to orientation 138, the optical axis of the liquid crystal rotates to make an angle or approximately $2\psi_0$ with the polarization direction of plate 134, and due to the birefringence of liquid crystal 100, the light will, in general, become elliptically polarized as it traverses liquid crystal 100. (The placement of the polarizers have to be altered if $\psi_0$ is about 45°. However, presently known compounds have values of $\psi_0$ between 10° and 30° in a 15—20°C temperature range). If the light of wavelength $\lambda$ which is polarized along the P1 direction is incident normally on crystal 100, then the fraction F, of the light intensity which is transmited will be given by:

$$F = F_0 [\sin(4\psi_0) \cdot \sin(\pi \cdot \Delta n \cdot d/\lambda)]^2$$

where d is the distance between the plates, $\Delta n$ is the principal refractive index difference and $F_0$ is the fraction transmitted by the parallel polarizers alone. For typical smectic C or H compounds we have $\psi_0 \simeq 23°$ in which case optimum transmission ($F=F_0$) can be achieved for $d \simeq \lambda/2 \, \Delta n$, i.e. for $d \simeq 1.2 \, \mu m$ since $\Delta n \simeq 0.2$. Hence only very thin samples are required for significant electro-optical effects. This is a useful property since, as a result, the range of angles of incidence over which electro-optical effect is operative is large.

The polarizer-liquid crystal-polarizer geometry may also be exploited for more general orientations of the polarizer and liquid crystal. Light exiting the first polarizer will be polarized along the direction of its easy axis. In passing through the liquid crystal this light will become elliptically polarized. The second polarizer will then select the component of the elliptically polarized light parallel to its easy axis.

As is well known, with white light incident on such an arrangement, the exiting light will exhibit birefringence colors, which may be selected by appropriate relative orientation of the sample and polarizers.

Any means may be employed to generate the electric field. All that is necessary is a pair of electrodes on opposite sides of the liquid crystal. If a tin oxide coating is employed on plates 132 and 134, conductors may be attached to the coating and a voltage applied across plates 132 and 134 to create an electric field.

Figure 2 illustrates an embodiment which may be employed as a matrix addressed video display. Electrodes 148 are attached to plate 132 in a uniformly spaced and parallel manner. Electrodes 146 are applied in the same manner to plate 134 except in a direction perpendicular to electrodes 148. Each of terminals 152 of switch 150 is electrically connected to one of electrodes 148. Similarly, each of terminals 156 of switch means 154 is electrically connected to one of electrodes 146. Terminal 158 of switch 150 and terminal 160 of switch 154 are connected to opposite terminals of a voltage source. Switches 150 and 154 include means for applying the voltage from the voltage source across any of electrodes 148 and any of electrodes 146.

Thus, each of the rectangular volumes of liquid crystal 100 which lies perpendicularly between any one of electrodes 146 and any one of electrodes 148 defines a region in liquid crystal 100. Switch means 150 and 154 can be controlled to apply a voltage across the electrodes contiguous with any particular rectangular volume. This produces an electrical field within the rectangular volume perpendicular to plates 132 and 134 and parallel to layers 102 in which field dipoles $\vec{P}$ tend to align.

Switches 150 and 154 also provide means for reversing the polarity of the voltage across electrodes 146 and 148 so that the direction of the field within any particular rectangular volume can be reversed. By reversing the direction of the electric field, the orientation of the molecules in any particular rectangular volume region of liquid crystal 100 can be changed. In this application the observed threshold behavior is essential if voltages applied to selected electrode 146 and 148 are to switch only that volume defined by their intersection.

Although only a few exemplary embodiments of this invention have been described in detail above, those skilled in the art will readily appreciate that many modifications are possible in the exemplary embodiments without materially departing from the novel teachings and advantages of this invention. For example, a back reflector may be disposed behind plate 134 to form a device operative in a reflective mode. Light passes through plate 132, sample 100, and plate 134 and reflects off of the reflector back through these layers.

Accordingly, all such modifications are intended to be included within the scope of this invention as defined in the following claims.

## Claims

1. A liquid crystal electro-optical device wherein between polarizers is arranged a liquid crystal confined between two plane surfaces of two plates (132, 134), the liquid crystal being a chiral tilted smectic C- or H-type material, said surfaces comprising a treatment to favor a liquid crystal molecular orientation at said surfaces which influences the molecular long axes toward an orientation parallel to the surfaces, and wherein a layered liquid crystal structure has its layers perpendicular to the surfaces, electrodes being arranged on both sides of the liquid crystal, characterized in

a) that said surface treatment is arranged to enforce the said molecular orientation parallel to the surfaces (132, 134) such that it permits an orientation of unspecified direction in the surface plane, and

b) that the distance between said two surfaces is sufficiently small to suppress the inherent tendency of the chiral tilted smectic C- or H- type material for helical arrangement of molecular orientation, thereby at the same time removing the cancelling of dipole moments caused by a helix and forming bistable ferroelectric domains switchable by means of an electric field across the surfaces, and

c) that said electrodes are split into a plurality of portions for enabling independent switching of different parts of the liquid crystal.

2. A liquid crystal electro-optical device according to claim 1, characterized in that the distance between said two lates (132, 134) is less than about five times the spiral step of said smectic material when in a non-confined state.

3. A liquid crystal electro-optical device according to claim 1 or 2, characterized in that the surface treatment includes a first set and a second set of grooves, said first set of grooves forming an angle with said second set of grooves, said first set of grooves and said second set of grooves being parallel respectively to the two stable orientations of the long axes of the liquid crystal molecules.

4. A liquid crystal electro-optical device according to any one of the previous claims, characterized by a set of parallel elongated electrodes (146, 148), arranged on each plate (132, 134), the electrodes of the two plates having perpendicular directions and switch means (150, 154) for coupling an electric source (158, 160) to a chosen electrode in each of the sets of electrodes.

5. A liquid crystal electro-optical device according to any one o the preceding claims, characterized in that the chiral tilted smectic crystal is p-decyloxy-benzylidene-p'-amino-2-methyl - butyl - cinnamate or p - hexyloxybenzylidene - p' - amino - 2 - chloropropyl-cinnamate.

6. A process of making a liquie crystal electro-optical device according to any one of the preceding claims and vaving a liquid crystal arranged between two plates (132, 134), by means of which an electric field is applicable to at least a portion of the liquid crystal, at least one of said plates being transparent, characterized by choosing a material having a chiral tilted smectic phase and further having a second phase at a higher temperature, which second phase is a smectic A-phase, a chiral nematic phase, or an isotropic phase, disposing said material between said two plates (132, 134), with a mutual distance between said plates being sufficiently small to suppress the inherent helix in said first phase, bringing said material by heating to said second phase, aligning said material, either in said second phase or in passing from said second phase under cooling to said chiral tilted smectic phase, so that the molecules of the material become substantially parallel to each other and to said plates, to obtain said chiral tilted smectic phase having then layers which are substantially perpendicualr to said plates.

7. A process according to claim 6, characterized in that aligning is made by applying a magnetic field parallel to the two plates.

8. A process according to claim 6, characterized in that shear aligning of the smectic is performed by gently moving the two plates relative to each other in a direction parallel to the plates.

## Revendications

1. Dispositif électro-optique à cristal liquide dans lequel est disposé entre des polariseurs un cristal liquide emprisonné entre deux surfaces planes de deux plaques (132, 134), le cristal liquide étant une substance smectique à inclinaison chirale de type C ou H, lesdites surfaces subissant un traitement pour favoriser sur celles-ci une orientation moléculaire du cristal liquide qui tend à orienter les grands axes moléculaires parallèlement auxdites surfaces, et dans lequel les couches d'une structure en couches du cristal liquide sont perpendiculaires aux surfaces, des électrodes étant montées de part ed d'autre du cristal liquide, caractérisé par le fait que

a) le traitement de surface est conçu pour renforcer le parallélisme de ladite orientation moléculaire par rapport aux surfaces (132, 134) de façon à permettre d'obtenir une orientation d'une direction non spécifiée dans le plan de surface, et

b) la distance entre les deux dites surfaces est suffisamment faible pour supprimer la tendance inhérente à la substance smectique à inclinaison chirale de type C ou H à prendre une orientation moléculaire en hélice, en supprimant ainsi en même temps l'annulation des moments dipolaires due à une hélice et en formant des domaines ferroélectriques bistables commutables au moyen d'un champ électrique suivant les surfaces, et

c) les électrodes son divisées en une série de sections pour permettre une commutation undépendante des différentes parties du cristal liquide.

2. Dispositif électro-optique à cristal liquide selon la revendication 1, caractérisé par le fait que la distance entre les deux dites plaques (132, 134) est inférieure à clinq fois les pas spiralé de ladite substance smectique lorsque celle-ci est dans un état non emprisonné.

3. Dispositif électro-optique à crystal liquide selon la revendication 1 ou 2, caractérisé par le fait que le traitement de surface comprend la création d'un premier jeu et d'un second jeu de rainures, ledit premier jeu de rainures formant un angle avec ledit second jeu de rainures, ledit premier jeu de rainures et ledit second jeu de rainures étant respectivement parallèles aux deux orientations stables des grands axes des molécules du cristal liquide.

4. Dispositif électro-optique à cristal liquide selon l'une quelconque des revendications précédentes, caractérisé par un jeu d'électrodes (146, 148) allongées parallèles disposées sur chaque plaque (132, 134), les électrodes des deux plaques ayant des directions perpendiculaires et des moyens de commutation (150, 154) pour le couplage d'une source de courant électrique (158), 160), avec une électrode choisie dans chacun des jeux d'électrodes.

5. Dispositif éelectro-optique à cristal liquide, selon l'une quelconque des revendications précédentes, caractérisé par le fait que le cristal smectique à inclinaison chirale est le p-décyloxy-benzylidène-p'-amino-2-méthyl-butyl-cinnamate ou le p-hexyloxy-benzylidène-p'-amino-2-chloropropyl-cinnamate.

6. Procédé de réalisation d'un dispositif électro-optique à cristal liquide selon l'une quelconque des revendications précédentes et comportant un cristal liquide disposé entre deux plaques (132, 134), au moyen duquel un champ électrique est applicable sur au moins une partie du cristal liquide, au moins l'une desdites plaques étant transparente, caractérisé par le fait que l'on sélectionne une substance ayant une phase smectique à inclinaison chirale et présentant en outre une seconde phase à une température plus élevée, ladite seconde phase étant une phase smectique A, une phae nématique chirale, ou une phase isotropique, on dispose ladite substance entre les deux dites plaques (132, 134), de façon que la distance mutuelle entre lesdites plaques soit suffisamment faible pour supprimer l'hélice inhérente dans ladite première phase, on amène ladite substance par chauffage dans ladite seconde phase, on aligne ladite substance au cours de ladite seconde phae ou au cours de la transition de ladite seconde phase par refroidissement dans ladite phase smectique à inclinaison chirale, de façon que les molécules de la substance diviennent sensiblement parallèles les unes aux autres et auxdites plaques, en obtenant ladite phase smectique à inclinaison chirale comportant alors des couches qui sont sensiblement perpendiculaires auxdites plaques.

7. Procédé selon la revendication 6, caractérisé par le fait que l'alignement est effectué en appliquant un champ magnétique parallèlement aux deux plaques.

8. Procédé selon la revendication 6, caractérisé par le fait que l'on effectue un alignement par cisaillement de la phase smectique en déplaçant doucement les deux plaques l'une par rapport à l'autre dans une direction parallèle auxdites plaques.

**Patentanspüche**

1. Elektrooptische Flüssigkristallvorrichtung, wobei zwischen Polarisatoren ein Flüssigkristall angeordnet ist, der von bzw. zwischen zwei ebenen Flächen zweier Scheiben (132, 134) eingeschlossen ist, welcher Flüssigkristall ein gewendelt geformtes smektisches C-oder H-Material ist, wobei auch diese Flächen eine Behandlung erfahren haben, um eine Molekülanordnung bei den Flächen zu begünstigen, welche die Ausrichtung der Molekül-Längsachsen parallel zu den Flächen beeinflußt, und wobei eine geschichtete Flüssigkristall-Struktur ihre Schichten senkrecht zu den Flächen hat und ferner an beiden Seiten des Flüssigkristalls Elektroden angeordnet sind, dadurch gekennzeichnet, daß:

a) die Oberflächen-Behandlung zum Verstärken der Molekülausrichtung parallel zu den Flächen (132, 134) derart ausgeführt wird, daß sie eine Orientierung in unbestimmte Richtung in der Flächen-Ebene ermöglicht, und

b) der Abstand zwischen diesen Flächen hinreichend gering ist, um die inhärente Tendenz des spiraligen smektischen C- oder H-Materials zur gewendelten Anordnung der Molekülausrichtung zu unterdrücken und um hierbei gleichzeitig das Löschen der Dipolmomente zu beseitigen, die von einer Wendel (Helix) verursacht sind, und um bistabile ferroelektrische Bereiche (Domänen) zu bilden, die mittels eines elektrischen Feldes quer zu den Flächen steuerbar sind, und

c) die erwähnten Elektroden in eine Vielzahl von Abschnitten aufgeteilt sind, um eine unabhängige Steuerung von unterschiedlichen Bereichen des Flüssigkristalls zu ermöglichen.

2. Elektrooptische Flüssigkristallvorrichtung, dadurch gekennzeichnet, daß der Abstand zwischen den beiden Scheiben (Platten 132, 134) kleiner ist als fünfmal die Spiralstufe (spiral step) des smektischen Materials, wenn dieses im nichteingeschlossenen Zustand, sich befindet.

3. Elektrooptische Flüssigkristallvorrichtung nach Anspurch 1 oder 2, dadurch gekennzeichnet, daß die Oberflächenbehandlung das Schaffen eines ersten und eines zweiten Satzes von Riefen (grooves) beinhaltet, daß der erste Satz von Riefen mit dem zweiten Satz von Riefen einen Winkel bildet und daß der erste Satz von Riefen sowie der zweite Satz von Riefen parallel zu jeweils beiden stabilen Richtungen der langen Achsen der Flüssigkristall-Moleküle ist.

4. Elektrooptische Flüssigkristallvorrichtung nach einem der vorherigen Ansprüche, dadurch gekennzeichnet, daß ein Satz paralleler länglicher Elektroden (146, 148) vorgesehen und an jeder der Scheiben (132, 134) angebracht ist, daß die Elektroden der beiden Platten senkrecht zueinander gerichtet sind sowie mit Schalt-Mitteln (150, 154) verbunden sind, welche die Verbindung zu einer ausgewählten Elektrode aus jedem der Sätze von Elektroden von einer Elektrizitätsquelle (158, 160) herauszustellen vermögen.

5. Elektrooptische Flüssigkristallvorrichtung nach einem der vorherigen Ansprüche, dadurch gekennzeichnet daß das spiralig gedrillte smektische Kristall ein p-Dekyloxy-Benzyliden-p'-Amino-2-Methyl-Butyl-Cinnamat oder ein p-Hexyloxy - Benzyliden - p' - Amino - 2 - Chloropropyl-Cinnamat ist.

6. Verfahren zum Herstellen einer elektrooptischen Flüssigkristallvorrichtung, nach einem beliebigen der vorherigen Ansprüche, wobei ein Flüssigkristall zwischen zwei Scheiben (Platten 132, 134) angeordnet ist und Mittel vorgesehen sind, mittels deren ein elektrisches Feld auf wenigstens einen Bereich des Flüssigkristalls einwirken kann, wozu, wenigstens eine dieser Scheiben durchsichtig ist, dadurch gekennzeichnet, daß ein Material mit einer spiraligen smektischen Phase verwendet wird, das ferner bei einer höheren Temperatur eine zweite Phase hat, welche zweite Phase eine smektische A-Phase, eine spiralig nematische Phase, oder eine isotrope Phase ist, daß dieses Material zwischen den beiden Scheiben (132, 134) angeordnet ist, die einen solchen Abstand haben, daß die inhärente Helix (Wendel) in der ersten Phase unterdrückt wird, daß das Material durch Erwärmen in die zweite Phase verbracht wird, daß das Material entweder in der zweiten Phase oder beim Verbringen unter Kühlung der zweiten Phase in die spiralig geformte smektische Phase so gerichtet wird, daß die Moleküle des Materials genau zueinander und zu den Scheiben parallel gerichtet sind, um diese spiralig gerichtete smektische Phase zu erhalten, welche danach Lagen aufweist, die genau senkrecht zu den Scheiben sind.

7. Verfahren nach Anspruch 6, dadurch gekennzeichnet, daß das Ausrichten durch Anwenden eines Magnetfeldes paralle zue den beiden Scheiben (Platten 132, 134) durchgeführt wird.

8. Verfahren nach Anspruch 6, dadurch gekennzeichnet daß die Scher-Ausrichtung (shear aligning) des smektischen Materials (smectic) durch leichtes gegensitiges Bewegen der beiden Scheiben durchgeführt wird.

fig. 1

fig. 2